(19) Europäisches Patentamt / European Patent Office / Office européen des brevets

(11) **EP 3 411 942 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(21) Anmeldenummer: **17716106.4**

(22) Anmeldetag: **10.02.2017**

(51) Int Cl.:
*H02K 7/02* (2006.01)     *F16F 15/30* (2006.01)

(86) Internationale Anmeldenummer:
**PCT/DE2017/100102**

(87) Internationale Veröffentlichungsnummer:
**WO 2017/137043 (17.08.2017 Gazette 2017/33)**

(54) **KINETISCHER GROSSSPEICHER FÜR STROM**

KINETIC LARGE POWER ACCUMULATOR

ACCUMULATEUR CINÉTIQUE DE COURANT D'UNE GRANDE CAPACITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2016 DE 102016102255**

(43) Veröffentlichungstag der Anmeldung:
**12.12.2018 Patentblatt 2018/50**

(73) Patentinhaber: **VPC GmbH**
**03226 Vetschau (DE)**

(72) Erfinder: **GOMES, José**
**29614 Soltau (DE)**

(74) Vertreter: **Haschick, Gerald**
**Patentanwaltskanzlei**
**Ostrower Wohnpark 2**
**03046 Cottbus (DE)**

(56) Entgegenhaltungen:
**EP-A2- 2 648 318      WO-A1-2013/149627**
**GB-A- 2 103 768      US-A- 4 132 130**
**US-A1- 2010 231 075**

EP 3 411 942 B1

**Beschreibung**

Die Energiespeicherung in Schwungradsystemen ist Stand der Technik. Diese Systeme werden stationär und mobil verbaut und können als verlässlich betrachtet werden. Ebenfalls Stand der Technik ist die Verwendung von Schwungrädern aus Kohlefaserverbundwerkstoff im Vakuum bei Umdrehungsgeschwindigkeiten von bis zu 80.000 rpm.

Die magnetische Lagerung von Schwungrädern bei hohen Umdrehungsgeschwindigkeiten ist ebenfalls Stand der Technik.

Das Dokument US 4 132 130 A offenbart einen verwandten kinetischen Stromspeicher

Als Beispiel mag ein mobiles Gerät dienen, welches derzeit als Kurzzeitspeicher im Volvo S60 verbaut wird. Dieses Gerät arbeitet mit 6 kg Schwungmasse aus einem Kohlefaserverbund und mit 60.000 rpm. im Vakuum. Der Durchmesser des Schwungrades beträgt 0,2 m.

Die bei 60.000 rpm gespeicherte Energie liegt bei ca. 0,3 kWh.

Derzeit noch nicht Stand der Technik ist die Verwendung von supraleitenden Spulen im elektrischen Antriebssystem und die Verwendung von Supraleitern für das magnetische Schweben. Allerdings ist die Funktion in anderen Zusammenhängen hier bereits im Technikumsmaßstab nachgewiesen, bzw. es steht bereits der großtechnische Einsatz kurz bevor.

Die Aufgabe der Erfindung ist es, einen kinetischen Großspeicher für Strom mit den gleichen physikalischen Prinzipien wie für die Energiespeicherung mit üblichen Schwungradsystemen zu entwickeln, wobei die wirksame Schwungmasse um das Zweimillionenfache vergrößert wird.

Erfindungsgemäß wird die Lösung so ausgeführt, dass der Patentanspruch 1 mit seinen Unteransprüchen realisiert wird. Dabei wird die Umfangsgeschwindigkeit auf den doppelten Wert auf ca. 1.300 m/s erhöht und die Schwungmasse aus Einhausung und Seilen auf einen Kreisring um eine Systemachse im Mittelpunkt der Kreisbahn konzentriert. Die entsprechende Erhöhung der drei bestimmenden Parameter, wie Abstand der kreisringförmigen Schwungmasse von der Drehachse, Größe der Schwungmasse und der Umfangsgeschwindigkeit, erhöhen die speicherbare Energie.

Eine solche Steigerung der Schwungmasse sprengt die Möglichkeiten bisheriger konstruktiver Ansätze. Aus dem bisherigen Schwungrad kleiner Baugröße muss ein umlaufendes großes Reifenvolumen, ein Kreisring, werden, um Raum für eine entsprechend große Masse zu gewinnen. Diese reifenförmige, als Kreisring ausgebildete Schwungmasse muss in geeigneter Weise gelagert und angetrieben bzw. gebremst werden.

Die speicherbare Energie erhöht sich mit der Umfangsgeschwindigkeit der Schwungmasse von bis zu 1.300 m/s und je nach Größe der eingesetzten Masse auf Werte zwischen 14 MWh und 1.600 MWh. Der letztere Wert gilt bei einer Schwungmasse von 6.860 to und einer Umfangsgeschwindigkeit von 1.300 m/s. Diese Systeme sind aufgrund ihrer großen Massen für stationäre Anwendungen, zum Beispiel als Speicherkraftwerk in Inselsystemen oder in Verbundnetzen, vorgesehen.

Ferner können diese Systeme sowohl in der Primärregelung von Netzen dienen, als auch größere Energiemengen in der Sekundärregelung ausspeisen. Die parallele Bedienung beider Märkte erfordert allerdings ggf. eine Erweiterung des entsprechenden Netzanschlusses und der Leistungsaufnahme und -abgabe des Antriebssystems des hier beschriebenen Kreisringes. Ferner ist natürlich eine Zulassung zur Teilnahme an dem jeweiligen Marktsegment erforderlich.

Das hier beschriebene System ist derzeit so ausgelegt, dass es seine gespeicherte Energie innerhalb von zwei Stunden ausspeichern bzw. vom Stillstand der Schwungmasse auf volle Kapazität speichern kann. Dementsprechend sollen die Aufnahme- und Abgabeleistungen für die oben genannten Baugrößen 7 MW - 800 MW betragen. Bei paralleler Lieferung von Wirkleistungssekundenreserve ist auch eine Anschlussleistung von bis zu 5 GW grundsätzlich denkbar. Hier wäre dann darauf zu achten, dass auch der Linearantrieb eine ausreichende Leistungsaufnahme über die gesamte Länge der Kreisbahn vorweisen kann und auch das Netz, in das man liefern möchte, solche Leistungen am Anschlusspunkt verträgt.

Für die Auslegung eines großen und schweren schnelldrehenden Reifens bzw. Kreisringes, wie er hier verwendet wird, gilt als Obergrenze für die Auslegung der Betriebsparameter die Zugfestigkeit des eingesetzten Materials der Schwungmasse. Das Material gibt das Limit für die zulässigen Zugspannungen vor. Über das gewählte Material ergibt sich dann die Materialdichte als dessen Kenngröße. Aus der im Dauerbetrieb zulässigen Zugspannung ergibt sich dann die zulässige Umfangsgeschwindigkeit. Aus rotierender Masse und Umfangsgeschwindigkeit ergibt sich die speicherbare Energie.

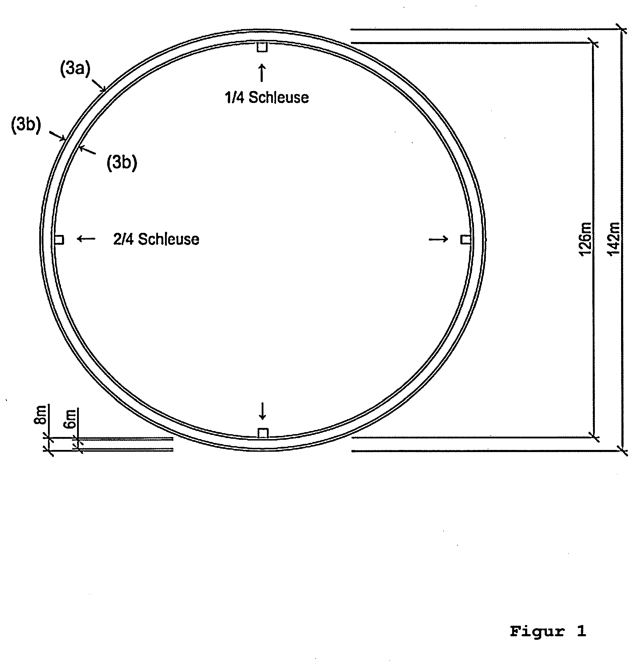

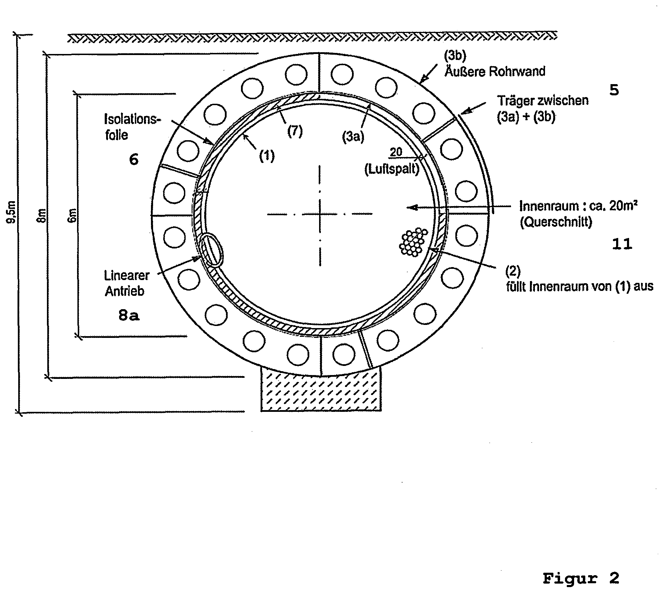

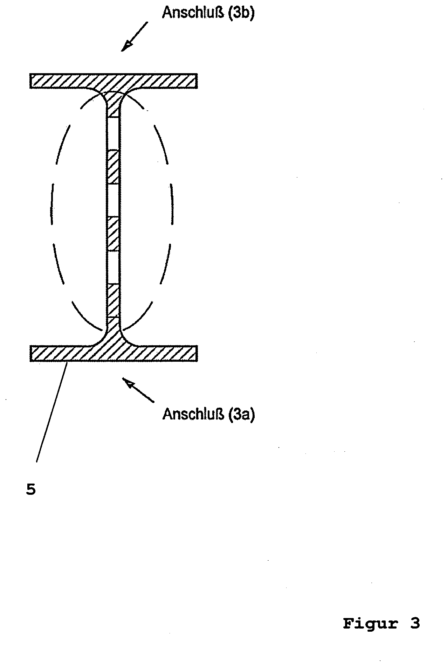

In einem Ausführungsbeispiel wird die Erfindung näher erläutert. Dabei sind die Figur 1, die Figur 2 und die Figur 3 als schematische Zeichnungen des kinetischen Großspeichers gegeben.

Es zeigen:

die Figur 1 - den Aufbau der Kreisbahn 3,
die Figur 2 - die schematische Darstellung des kinetischen Großspeichers und
die Figur 3 - einen Träger 5, welcher zwischen der inneren und äußeren Hülle vorhanden ist.

Die Zugspannungen treten aufgrund der in einer Kreisbahn fahrenden Masse und der dabei wirkenden Zentrifugalkraft auf.

Unter der Voraussetzung, dass der Querschnitt der bewegten Masse konstant ist, gilt für die zulässige Zugspannung:

$$F/A = rho \times v2;$$

insofern ist ein Material mit hoher Zugfestigkeit bei gleichzeitig geringer Dichte besonders vorteilhaft. Diese Bedingung muss von der Einhausung 1 und von jedem Seil 2 der Schwungmasse einzeln erfüllt werden.

F = Zugkraft

A = Querschnittsfläche auf die die Zugkraft wirkt

FIA = Zugspannung

rho = Dichte des Materials, aus dem die Schwungmasse besteht

V = Umfangsgeschwindigkeit des Massenzentrums des Querschnitts der Einhausung 1, des einzelnen Seils 2 oder Seilpakets.

Die rotierende Masse besteht aus einer Einhausung 1, der Außenhülle des rotierenden Reifens, und den im inneren verlegten und während der Bewegung unter Spannung stehenden Seilen 2, die keine kraftschlüssige Verbindung mit der Außenhülle haben. Die Seile 2 werden im Ruhezustand auf dem Boden der Einhausung 1 liegend verlegt und ggf. zu Paketen verdrillt bzw. verschnürt. Alternativ ist die Führung und Auflage der Seile 2 auf geeigneten Trägerstrukturen, die fest mit der Einhausung 1 verbunden sind, möglich. Ferner werden die Seile 2 so verlegt, dass sie nach vollständiger Verlegung den Raum innerhalb der Einhausung 1 weitgehend ausfüllen. Die gesamte Schwungmasse besteht aus der Einhausung 1 und den im inneren verlegten Seilen 2 sowie ggf. auch aus den oben genannten zusätzlichen Trägerstrukturen. Von den Seilen 2 werden 100 bis 100.000 Stück innerhalb einer Einhausung 1 verlegt. Der Durchmesser der einzelnen Seile 2 richtet sich nach der Zweckmäßigkeit, der Herstellbarkeit und der Optimierung der Zugfestigkeit sowie des Kriechverhaltens und ggf. auch anderer Parameter. Ihre Anzahl richtet sich nach der gewünschten Gesamtmasse und den gewählten Durchmessern der Einzelseile 2.

Die beiden Enden eines jeweiligen Seiles 2 der Schwungmasse sind über eine Spannvorrichtung so verbunden, dass die Dehnung bzw. Kontraktion des Seiles 2 während des Betriebes ausgeglichen wird.

Ziel des Ausgleiches ist die Stabilisierung der Lage der Seile 2 in Relation zur Einhausung 1.

Statt der Auslegung als Seile 2 ist grundsätzlich auch eine andere Konstruktion für diesen Teil der Schwungmasse möglich. Zum Beispiel ist auch die Konstruktion einer einheitlichen/homogenen Schwungmasse anstatt einer Trennung in Seilen 2, Trägerstrukturen 5 und Einhausung 1 möglich.

Die Kreisbahn 3, in der sich die Einhausung 1 bewegt, ist evakuiert und superisoliert. Sie wird für den Betrieb auf - 190 °C heruntergekühlt. Dies ist auch die Betriebstemperatur für die Schwungmasse aus Einhausung 1 und Seilen 2. Die Kühlung von Kreisbahn 3 und Schwungmasse aus Einhausung 1 und Seilen 2 wird mit flüssigem Stickstoff oder mit einem anderen geeigneten Kühlungsmittel und einem geeigneten Kühlungssystem bewirkt.

Zur Begehung, wenn sich die Schwungmasse in Ruhe befindet und die Temperatur höher ist, wird die Schwungmasse an den Flanschen der Einhausung 1 aufgehängt. Dies erfolgt durch gebogene Haken 10, die sich aus der Decke der Kreisbahn 3 in die entsprechenden Aussparungen in den Flanschen drehen. Die Haken 10 und Aussparungen an den Flanschen sind alle so konstruiert, dass auf ganzer Länge der exakt gleiche Abstand zur Bahn eingehalten wird. Die Haken 10 werden elektrisch ein- und herausgedreht. Ferner müssen die Haken 10 so konstruiert sein, dass sie sich ohne Anhebung der Einhausung 1 wieder zurückfahren lassen. Alternativ könnten auch Stützen aus dem Boden hochgefahren werden und so die Schwungmasse halten, sobald die Temperaturen zur Begehung auf über - 190 °C erhöht werden.

Die Kreisbahn 3 besteht aus einem Innenrohr 3a, zum Beispiel einem Stahlrohr, mit einem Innendurchmesser von mehreren Metern, zum Beispiel bis zu 8 m.

Das äußere Stahlrohr 3b der Kreisbahn 3 ist in geeigneter Weise baulich nach außen hin eingefasst, zum Beispiel in einem unterirdischen Tunnel, der in üblicher Weise gebaut und beispielsweise mit Beton verkleidet wird. Die hohle Kreisbahn 3 wird doppelwandig ausgelegt und so konstruiert, dass sie einem Druck von außen nach innen von mindestens 1.100 hPa dauerhaft standhalten kann. Ferner muss die Einfassung 4 des Außenrohrs einer kurzzeitigen Druckbelastung im Rahmen der Bauvorschriften standhalten können, falls es im Inneren der Kreisbahn 3 durch einen Unfall zu einer Druckspitze kommen sollte. Ferner ist die Anlage versagenssicher, also Fail safe, für mögliche Ausfälle auszulegen, soweit dies möglich ist.

Es findet ferner eine möglichst gute thermische Isolierung zwischen dem Innenrohr 3a und dem äußeren Stahlrohr 3b statt. Die Träger 5, die zur Verstärkung des äußeren Stahlrohrs 3b gegen den Atmosphärendruck und als Halterung für das Innenrohr 3a angebracht sind, werden gegen das Innenrohr 3a in geeigneter Weise isoliert. Gleiches gilt für die Isolierung der beiden Rohre gegeneinander auf der verbleibenden Fläche. Hiermit ist die Isolierung der Zwischenräume zwischen dem koaxial verlegten Innenrohr 3a und dem äußeren Stahlrohr 3b der Kreisbahn 3 gemeint.

Der Raum innerhalb des äußeren Stahlrohrs 3b ist vollständig evakuiert. Das gilt sowohl für das Innenrohr 3a als auch für die Zwischenräume zwischen den koaxial zur Rohrachse verlegten Rohren 3a und 3b.

Als Isolation 6 ist zum Beispiel Superisolationsfolie im Vakuum vorgesehen. Die oben genannten Träger 5 sollten nach Möglichkeit aus einem nur sehr schlecht wärmeleitenden Material bestehen bzw. möglichst gut gegen das Innenrohr 3a und das äußere Stahlrohr 3b isoliert sein.

Das Innere des Innenrohrs 3a ist zu 3/4 mit Magneten 7 ausgelegt, die über eine Flussdichte von mindestens 0,6 Tesla verfügen. Lediglich das obere Viertel des Innenrohres 3a der Kreisbahn 3 bleibt unbelegt. Bei den Magneten 7 handelt es sich entweder um Permanent- bzw. Dauermagneten oder Elektromagneten mit supraleitenden Spulen. Die Aufgabe dieser Magneten 7 ist es, die Schwungmasse zu jedem Zeitpunkt in der Schwebe zu halten und der Zentrifugalkraft zumindest teilweise entgegenzuwirken.

Bei der Verwendung von supraleitenden Elektromagneten ist in der Regel die Verwendung von flüssigem Helium oder flüssigem Wasserstoff zur Kühlung dieser Magneten 7 notwendig. In diesem Fall sind diese Magneten 7 mit geeigneten Kühlsystemen zu versehen, die die Temperatur der Magnetspulen gegen die Innentemperatur der Kreisbahn 3 auf - 190 °C abgesenkt halten.

Um die Nachfüllung mit den oben genannten Kühlflüssigkeiten zu vermeiden, sind in diese Kühlsysteme Pulsrohrkühler zu integrieren, die elektrisch betrieben werden. Ferner ist das Kühlsystem der Magnetspulen vom Kühlsystem der Kreisbahn 3 ebenfalls in geeigneter Weise zu isolieren.

Bei dem mit den Magneten 7 belegten Innenrohr 3a sind jedoch die Flächen auszusparen, die vom Linearmotor 8b, der für Beschleunigung und Bremsung der Einhausung 1 samt Inhalt gebraucht wird, belegt werden muss. Dies gilt für alle Installationen, die für die Funktion und den Betrieb inklusive Steuerung und Kühlung des ggf. auch supraleitenden Linearmotors 8b notwendig sind. Gleiches gilt ggf. auch für die Energieversorgung und Kühlung der Magneten 7, falls es sich um Elektromagneten handeln sollte.

Falls für die Magneten 7 supraleitende Elektromagneten verwendet werden sollten, ist eine deutlich höhere Flussdichte als 0,6 Tesla zu prüfen, da diese ggf. eine höhere Umlaufgeschwindigkeit und damit auch Energiespeicherkapazität zulässt. Ziel wäre eine Flussdichte von bis zu 6 Tesla.

An 3/4 der Außenfläche der Einhausung 1, der Fläche, die dem ausgelegten Magneten 7 direkt gegenüberliegt, sind geeignete supraleitende Materialen 9, wie HTS, derart flächig angebracht, dass diese ihre Wirkung im Magnetfeld maximal entfalten können, um eine maximale Tragkraft bzw. eine maximale Gegenkraft zur Zentrifugalkraft zu bewirken. Ferner wird das supraleitende Material 9 so an der Einhausung 1 befestigt, dass auch bei höchster Zentrifugalbelastung kein Abriss des supraleitenden Materials 9 zu befürchten ist.

Auch an der Einhausung 1 ist die notwendige Aussparung für den Linearmotor 8a vorzusehen. Dies gilt auch hier für alle funktions- und betriebsnotwendigen Installationen. Der Linearmotor 8a) und 8b wird so eingebaut, dass er einen möglichst hohen Wirkungsgrad bei Beschleunigung und Bremsung und eine möglichst hohe Sicherheit erlaubt. Der genaue Einbauort ist das Ergebnis einer Detailauslegung. Gleiches gilt für die Auswahl von Dauer- oder Elektromagneten für Läufer des Linearmotors 8a und dem Stator des Linearmotors 8b.

Sobald alle Seile 2 der Schwungmasse aus Einhausung 1 und Seilen 2 verlegt und die Einhausung 1 sowie das Innenrohr 3a und das äußere Stahlrohr 3b der Bahn verschlossen sind, wird das Innenrohr 3a und der Zwischenraum zwischen den Rohren evakuiert und durch flüssigen Stickstoff auf unter - 190 °C gekühlt. Die Sprungtemperatur des supraleitenden Materials 9 beträgt - 180 °C. Sobald der Supraleiter aktiv ist, können die Haken 10 eingefahren werden, und die Schwungmasse aus Einhausung 1 und Seilen 2 schwebt frei im Magnetfeld, im Abstand, der von den Haken 10 vorgegeben wurde. Das Schweben ist eine Folge der Verdrängung des Magnetfeldes aus dem Inneren des Supraleiters. Der Zustand des Schwebens ist stabil und erfordert keine weitere Regelung.

Über den supraleitenden Linearmotor 8a und 8b wird nun elektrische Energie eingeleitet, und die Einhausung 1 beginnt sich beschleunigt zu bewegen. Diese Einleitung kann nun solange stattfinden, bis die kreisringförmige Schwungmasse aus Einhausung 1 und Seilen 2 ihre maximal zulässige Geschwindigkeit erreicht hat.

Falls man Energie ausspeichern möchte, kann über den Linearmotor 8a und 8b, der dann als Generator arbeitet, die Bewegungsenergie in elektrische Energie zurückverwandelt werden.

Da die gesamte Länge der Bahn zur Ein- und Ausspeisung von Energie genutzt werden kann, sind sehr große Aufnahme- und Abgabeleistungen möglich.

Die Einspeisung ist bei jeder Geschwindigkeit der Schwungmasse aus Einhausung 1 und Seilen 2 machbar, solange die Maximalgeschwindigkeit noch nicht erreicht ist. Eine Ausspeisung ist ebenfalls bei jeder Geschwindigkeit möglich, solange Bewegungsenergie im System ist.

Die Reaktionsschnelligkeit des Systems bei Ein- und Ausspeisevorgängen hängt allein von der Geschwindigkeit der Schalter und der Zeitverzögerung für den Wechsel der Polung des Linearmotors 8a und 8b ab. Sie kann aber ggf. durch eine Leistungselektronik weiter verbessert werden.

Die Kühlung des Systems muss zur Sicherstellung einer Temperatur von - 190 °C immer aufrechterhalten werden. Wird diese Temperatur, die unter der Sprungtemperatur der Supraleiter ist, überschritten, so würde die Schwungmasse aus Einhausung 1 und Seilen 2 nach Überschreiten der Sprungtemperatur von - 180 °C auf die ausgelegten Magnete 7 stürzen. Die Betriebstemperatur des Systems muss unter allen Umständen gesichert werden. Insofern ist eine Fail safe-Auslegung des Systems mit ausreichend träger Erwärmung und einem gut dimensionierten Kältemittelreservoir notwendig. Die Kühlmittelpumpen sollten redundant ausgelegt werden und über Notfallsysteme für die Energieversorgung verfügen.

Es bietet sich daher an, aus Sicherheitsgründen eine Maximaltemperatur von - 190 °C festzulegen, da die Siedetemperatur von Stickstoff unter Normaldruckbedingungen bei - 196 °C liegt; der Tripelpunkt des Stickstoffs liegt bei 124,6 hPa und ca. - 210 °C.

Um die Anlage von Normaltemperatur herunter zu kühlen und ausgehend vom Normaldruck zu evakuieren, ist zuerst die Spülung der Anlage mit trockenem Stickstoffgas, das eine Temperatur von mehr als 4 °C aufweist, anzusetzen, um den Eisansatz in der Anlage zu vermeiden. Sobald eine vollständige Spülung erfolgt ist, sollte tiefkalter Stickstoff eingeführt werden.

Der Einsatz von Vakuumpumpen und Kühlung ist so zu kombinieren, dass Kühlung und Evakuierung zusammen möglichst wenig Energie verbrauchen.

Spätestens, sobald die Zieltemperatur von höchstens - 190 °C erreicht wurde, ist das volle Vakuum herzustellen. Das Vakuum sollte so gut sein, wie es mit technisch und wirtschaftlich sinnvollem Aufwand möglich ist. Dadurch, dass die Einhausung 1 einen geschlossenen Ring bildet, gibt es keinen Staupunkt und keine Bugwelle. Dies reduziert die technischen Anforderungen an die Qualität des Vakuums.

Um während des Betriebes die notwendige Temperatur halten zu können, sind im Innenbereich des Innenrohres 3a Leitungen verlegt, die von flüssigem Stickstoff bei abgesenktem Druck, wobei die Siedetemperatur unter - 205 °C liegen sollte, oder einer sonstigen, geeigneten Kühlflüssigkeit durchflossen werden. Diese Leitungen befinden sich im Viertel des Innenrohrs 3a, in dem keine Magneten 7 verlegt sind. Die Wärme wird dabei dem Material des Innenrohrs 3a durch leitende Verbindung der Kühlrohre zum äußeren Stahlrohr 3b entzogen.

Ferner werden eventuell vorhandene supraleitende Magneten 7 und die Linearmotoren 8a und 8b ebenfalls aktiv gekühlt, um die Unterschreitung der Sprungtemperatur auch in diesen Spulen sicherzustellen und Energieverluste beim Antrieb gleich an der Quelle abzuführen. Da die derzeit technisch verfügbaren supraleitenden Spulen eine Kühlung mit flüssigem Helium oder flüssigem Wasserstoff benötigen, sind die Kühlkreisläufe hier neben den genannten Kühlmitteln auch mit Pulsrohrkühlern zu versehen. Ferner sind die Regeneratoren der Pulsrohrkühler ebenfalls direkt per Kühlleitung mit flüssigem Stickstoff zu kühlen, um die erforderliche Leistung der Pulsrohrkühler möglichst klein zu halten.

**Bezugszeichen**

1    Einhausung
2    Seil
3a    Innenrohr
3b    äußeres Stahlrohr
4    Einfassung
5    Träger
6    Isolationsfolie
7    Magnet
8a    Linearmotor
11    Innenraum
20    Luftspalt

**Patentansprüche**

1.    Kinetischer Stromspeicher, bei dem eine Schwungmasse als Kreisring ausgeführt ist und aus einer Einhausung (1) besteht, welche axial verlaufende Seile (2) beinhaltet, wobei die Seile (2) jeweils innerhalb der Einhausung (1) geführt sind, **dadurch gekennzeichnet, dass** eine Spannvorrichtung sowohl am Anfang als auch am Ende der Seile (2) angebracht ist, so dass mittels dieser Spannvorrichtung die Spannung der Seile ständig verändert werden kann und der kinetische Stromspeicher im Vakuum und/oder bei reduziertem Druck und bei tiefkalten Temperaturen von - 190 °C geführt ist und dabei die magnetische Lagerung der Schwungmasse aus der Einhausung (1) und den Seilen (2) unter der Verwendung von Hochtemperatursupraleitern sowie von Permanent- oder Elektromagneten (7) erfolgt und die Schwungmasse sich mittels eines Antriebs entlang einer Kreisbahn dreht, wobei der Antrieb aus Linearmotoren (8a, 8b) besteht, die entlang der gesamten Länge der Kreisbahn angeordnet sind.

**Claims**

1.    Kinetic electric energy storage, where a flywheel is implemented as an annulus and consists of an enclosure housing (1), which includes axially running cables (2), where the cables (2) are routed within the enclosure housing (1), **characterized in that a** clamping device is attached, both at the beginning as well as at the end of the cables (2), so that by means of this clamping device the voltage of the cables can be modified continuously and the kinetic power storage is operated in vacuum and/or at reduced pressure and at a deep-freeze temperature of - 190°C, where the magnetic storage of the centrifugal masses is implemented here from the enclosure housing (1) and the cables (2), with the use of high-temperature superconductors as well as permanent or electric magnets (7), and rotate the centrifugal masses along a circular orbit by means of a drive, where the drive consists of linear motors (8a, 8b), which are arranged along the entire length of the circular orbit.

**Revendications**

1.    Accumulateur d'énergie électrique cinétique dans lequel une masse oscillante est réalisée sous la forme d'un anneau circulaire et qui se compose d'un boîtier (1) contenant des câbles (2) posés axialement, les câbles (2) étant guidés chacun à l'intérieur du boîtier (1), **caractérisé en ceci** qu'un dispositif de serrage est monté, à la fois au début et à la fin des câbles (2), de sorte que la tension des câbles puisse être modifiée en permanence au moyen de ce dispositif de serrage et que l'accumulateur d'énergie électrique cinétique fonctionne sous vide et/ou à pression réduite et à des températures cryogéniques de -190°C, la masse oscillante étant supportée magnétiquement à partir du boîtier (1) et des câbles (2), en utilisant des supraconducteurs haute température et des aimants permanents ou des électroaimants (7), et la masse oscillante tournant sur une trajectoire circulaire au moyen d'un entraînement constitué de moteurs linéaires (8a, 8b) disposés sur toute la longueur de la trajectoire circulaire.

(3a)

(3b)

(3b)

1/4 Schleuse

2/4 Schleuse

126m

142m

8m

6m

Figur 1

(3b)
Äußere Rohrwand

Träger zwischen
(3a) + (3b)

**5**

Isolationsfolie

**6**

(7)     (3a)

(1)

20
(Luftspalt)

Innenraum : ca. 20m²
(Querschnitt)

**11**

Linearer
Antrieb

**8a**

(2)
füllt Innenraum von (1) aus

9,5m

8m

6m

**Figur 2**

Anschluß (3b)

5

Anschluß (3a)

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4132130 A